# EUROPÄISCHE PATENTSCHRIFT

(11) **EP 4 691 949 B1**
(45) Veröffentlichungstag und Bekanntmachung des Hinweises auf die Patenterteilung: **30.09.2026**
(21) Anmeldenummer: 25193162.2
(22) Anmeldetag: 31.07.2025
(51) Int. Cl.: B65G 49/06, B65G 49/05

(54) **ROLLE**
ROLLER
ROULEAU

(30) Priorität: 05.08.2024 AT 506502024
(43) Veröffentlichungstag der Anmeldung: 11.02.2026
(73) Patentinhaber: LISEC Austria GmbH, 3353 Seitenstetten (AT)
(72) Erfinder: HEIGL, Lukas, 3353 Seitenstetten (AT); GALLHUBER, Stefan, 3353 Seitenstetten (AT); BRANDSTETTER, Karl, 3353 Seitenstetten (AT)
(74) Vertreter: Beer & Partner Patentanwälte KG

(56) Entgegenhaltungen:
- WO-A1-2022/269413
- KR-A- 20060 040 168
- KR-B1- 101 693 739

## Beschreibung

Derartige Rollen werden in seitlichen Stützwänden von Einrichtungen zum Bearbeiten und/oder Fördern von (Flach-)Glasscheiben, Isolierglas-Rohlingen und Isolierglasscheiben verwendet.

Bekannt ist eine Rolle mit einer Rollenhalterung, die jeweils zwei in Richtung einer Einschubrichtung verlaufende - breite - Längsseiten und - schmale - Querseiten, und ein offenes Ende aufweist. Die Rolle ist in der Rollenhalterung drehbar gelagert und ragt teilweise aus dem offenen Ende der Rollenhalterung heraus. Das offene Ende der Rollenhalterung ist zumindest bereichsweise von einem nach außen abstehenden Flansch umgeben. Die Rollenhalterung weist an ihren Querseiten nach außen wegragende, elastisch zur Querseite hin bewegliche Halteelemente auf.

In herkömmlichen Anlagen zum Bearbeiten und/oder Fördern von Flachglasscheiben, Isolierglas-Rohlingen oder Isolierglasscheiben werden Flachglasscheiben, Isolierglas-Rohlinge oder Isolierglasscheiben zumindest abschnittsweise in einer zur Lotrechten geneigten Ebene transportiert. Die Flachglasscheiben, die Isolierglas-Rohlinge oder die Isolierglasscheiben stehen mit einem ihrer Ränder auf einer Fördereinrichtung auf und lehnen an einer Stützwand, in der mehrere Rollen vorgesehen sind, an.

Da die Rollen Verbrauchsgegenstände sind, die sich mit der Zeit abnutzen, sind die Rollenhalterungen von der Stützwand abnehmbar. Bei Bedarf, d.h. wenn Rollen beschädigt oder abgenutzt sind, können Rollenhalterungen von der Stützwand abgenommen und gegen eine Rollenhalterung mit einer neuen Rolle ausgewechselt oder aber mit ausgewechselter Rolle weiterverwendet werden.

Rollenhalterungen sind üblicherweise in eine Platte der Stützwand eingesetzt, die je nach Einsatzzweck dicker oder dünner ausgeführt ist. Die Platten sind beispielsweise dicke Platten aus Holz oder dgl., oder dünne Platten aus Metall (Blech).

Zum allgemeinen Stand der Technik sind EP 0 261 471 A2, DE 10 2012 000 464 A1, CN 110406816 A und CN 211619079 U zu nennen.

CN 211619079 U offenbart eine Rolle, deren Rollengehäuse mit eingebauter Rolle mit Hilfe von Clips in Montageöffnungen an der Rückseite einer Stützwandplatte befestigt werden. An der Vorderseite der Stützwandplatte wird das Rollengehäuse mit Schrauben befestigt.

Zur Montage einer Rollenhalterung in einer (dicken) Platte wird die Rollenhalterung so weit in ein in der Platte vorgesehenes Loch mit einer der Außenform der Rollenhalterung korrespondierenden Kontur eingeschoben, bis der an dem offenen Ende der Rollenhalterung vorgesehene Flansch an der Platte anliegt. Halteelemente (Klinken, Haltenasen oder Rastnasen), die beim Einschieben der Rollenhalterung in das Loch in der Platte (elastisch) nach innen gebogen werden, federn bei vollständig eingeschobener Rollenhalterung nach außen und fixieren die Rollenhalterung in dem Loch in der Platte der Stützwand, da die freien Enden der Halteelemente an der Rückseite der Platte der Stützwand anliegen.

Herkömmliche Rollenhalterungen für dünne Platten (aus Blech) sind anders aufgebaut als Rollenhalterungen für dicke Platten und weisen beispielsweise eine Basis auf, von deren im Verwendungszustand der Flachglasscheibe oder der Isolierglasscheibe zugewandten Seite zwei Schenkel weg ragen, zwischen und an denen die Rolle gelagert ist. An der im Verwendungszustand an der Platte anliegenden Seite der Basis ist ein Gewindebolzen angeordnet. Zur Montage der Rollenhalterung wird diese mit dem Gewindebolzen durch ein Loch in der dünnen Platte gesteckt und mit einer auf den Gewindebolzen geschraubten Mutter fixiert.

Die Vielzahl an unterschiedlich geformten Rollenhalterungen führt dazu, dass in ein und derselben Flachglas- oder Isolierglas-Anlage oder Flachglas- oder Isolierglas-Bearbeitungslinie wenigstens zwei Typen von Rollenhalterungen zum Einsatz kommen, was jedoch die Instandhaltung der Anlage bzw. Bearbeitungslinie erschwert.

Der Erfindung liegt die Aufgabe zu Grunde, eine Rolle mit Rollenhalterung zur Verfügung zu stellen, die anders als die aus dem Stand der Technik bekannten Rollen vielseitig einsetzbar ist.

Insbesondere soll erfindungsgemäß eine Rolle mit einer Rollenhalterung bereitgestellt werden, die sowohl in dicken als auch in dünnen Platten von Stützwänden in Förder- und/oder Bearbeitungsanlagen für Glasscheiben, Isolierglas-Rohlinge oder Isolierglasscheiben verwendbar ist.

Gelöst wird diese Aufgabe erfindungsgemäß mit einer Rolle mit Rollenhalterung, die die Merkmale von Anspruch 1 aufweist.

Bevorzugte und vorteilhafte Ausführungsformen der Rolle der Erfindung sind Gegenstand der Unteransprüche.

Erfindungsgemäß ist vorgesehen, dass die Rollenhalterung an wenigstens einer der Seiten wenigstens ein von der Seite wegragendes, elastisch zur Seite hin bewegliches, weiteres Halteelement aufweist, das vom offenen Ende der Rollenhalterung einen anderen Abstand aufweist als das wenigstens eine, erste Halteelement, insbesondere näher zum offenen Ende der Rollenhalterung angeordnet ist als das wenigstens eine erste Halteelement.

Die Rollenhalterung der erfindungsgemäßen Rolle weist zusätzlich zu den (ersten) Halteelementen bekannter Rollenhalterungen wenigstens ein weiteres Halteelement auf, das vom offenen Ende der Rollenhalterung einen anderen Abstand hat als die ersten, in den schmalen Querseiten der Rollenhalterung vorgesehenen Halteelemente der bekannten Rollenhalterungen.

In einer möglichen Ausführungsform weist die Rollenhalterung der erfindungsgemäßen Rolle wenigstens eine Gruppe weiterer Halteelemente auf, die vom offenen Ende der Rollenhalterung einen identischen Abstand haben, der aber ein anderer Abstand - größer oder kleiner - ist als der Abstand der ersten Halteelemente vom offenen Ende der Rollenhalterung der bekannten Rollenhalterungen.

Beispielsweise sind die ersten Halteelemente bekannter Rollenhalterungen in einem Abstand vom offenen Ende der Rollenhalterung angeordnet, der für die Montage der Rolle in einer dicken Platte einer Stützwand passt - diese ersten Halteelemente werden hier auch als "distale Halteelemente" bezeichnet.

Das wenigstens eine zusätzliche Halteelement der Rollenhalterung der erfindungsgemäßen Rolle weist vom offenen Ende der Rollenhalterung insbesondere einen Abstand auf, der kleiner ist als der Abstand der distalen (ersten) Halteelemente, und der für die Montage der Rolle in einer dünnen Platte passt - dieses wenigstens eine zusätzliche Halteelement wird hier auch als "proximales Halteelement" bezeichnet.

Im Rahmen der Erfindung ist auch in Betracht gezogen, an der Rollenhalterung mehrere distale Halteelemente und mehrere proximale Halteelemente vorzusehen.

Beispielsweise können zwei oder mehr als zwei Gruppen aus distalen Halteelementen und zwei oder mehr als zwei Gruppen aus proximalen Halteelementen vorgesehen sein, wobei die Halteelemente jeder Gruppe vom offenen Ende der Rollenhalterung den gleichen Abstand haben.

Eine Gruppe aus ersten Halteelementen kann beispielsweise zwei distale Halteelemente umfassen. Eine Gruppe aus weiteren Halteelementen kann beispielsweise vier proximale Halteelemente umfassen.

Die Abstände der Gruppen aus Halteelementen vom offenen Ende der Rollenhalterung können verschieden groß sein. Dies hat den vorteilhaften Effekt, dass ein und dieselbe Ausführungsform der Rollenhalterung für verschieden dicke Platten von Stützwänden verwendbar ist. Die Rollenhalterungen werden in den Löchern in Platten von Stützwänden durch die Halteelemente gehalten, die an der Rollenhalterung entsprechend der Dicke der Platte angeordnet sind - d.h. deren freie Enden vom offenen Ende der Rollenhalterung den "richtigen", d.h. der Dicke der Platte entsprechenden, Abstand haben.

Im Rahmen der Erfindung sind die Halteelemente beispielsweise federnde Zungen, die aus Seiten der Rollenhalterung dreiseitig freigestellt sind und deren freie Enden im entlasteten Zustand der Halteelemente über die Außenseite der Rollenhalterung vorstehen. Die Zungen können als federnde Klinken verstanden werden. Die freien Enden der Zungen der Halteelemente weisen zum offenen Ende der Rollenhalterung hin.

Weitere Einzelheiten und Merkmale der erfindungsgemäßen Rolle mit Rollenhalterung ergeben sich aus der nachstehenden Beschreibung der in den Zeichnungen gezeigten, bevorzugten Ausführungsbeispiele. Es zeigt:
- Fig. 1: in Schrägansicht eine Rolle mit Rollenhalterung,
- Fig. 2: einen Formteil (Halbschale) der Rollenhalterung,
- Fig. 3: eine Rolle,
- Fig. 4: die Rolle mit Rollenhalterung von der offenen Seite der Rollenhalterung aus gesehen,
- Fig. 5: eine an einer dünnen Platte (Blech) montierte Rolle,
- Fig. 6: eine Schrägansicht zu Fig. 5,
- Fig. 7: eine andere Schrägansicht zu Fig. 5,
- Fig. 8: eine an einer dicken Platte (Holz) montierte Rolle,
- Fig. 9: eine Schrägansicht zu Fig. 8 und
- Fig. 10: eine andere Schrägansicht zu Fig. 8.

Eine erfindungsgemäße Rolle 1 ist in einer Rollenhalterung 2 drehbar gelagert. Die Rollenhalterung 2 ist im Wesentlichen becherartig ausgebildet und weist zwei einander gegenüberliegende, breitere Längsseiten 3 und zwei - im gezeigten Ausführungsbeispiel - konvex gekrümmte, schmalere Querseiten 4 auf.

Die Rolle 1 steht über das offene Ende 6 der Rollenhalterung 2 über.

An dem offenen Ende 6 der Rollenhalterung 2 ist ein nach außen abstehender Flansch 7 vorgesehen.

In jeder Querseite 4 der Rollenhalterung 2 ist ein erstes Halteelement 8 vorgesehen.

In jeder Längsseite 3 der Rollenhalterung 2 sind im gezeigten Ausführungsbeispiel zwei weitere Halteelemente 9 - also insgesamt vier Halteelemente 9 - vorgesehen. Die weiteren Halteelemente 9 haben als proximale Halteelemente 9 vom offenen Ende 6 (dem Flansch 7) der Rollenhalterung 2 einen kleineren Abstand als die ersten, in den Querseiten 4 der Rollenhalterung 2 vorgesehenen ersten, distalen Halteelemente 8.

Die Halteelemente 8 und 9 sind als dreiseitig freigestellte Zungen 10 ausgebildet, die an ihrem freien Ende 11 jeweils eine Rastfläche 12 aufweisen. Über die Rastflächen 12 stützen sich die Halteelemente 8 und 9 bei einer in einem Loch 13 in der Platte 14 einer Stützwand eingesetzten Rollenhalterung 2 an der Rückseite der Platte 14 ab und fixieren so die Rollenhalterung 2 mit der Rolle 1 in der Stützwand.

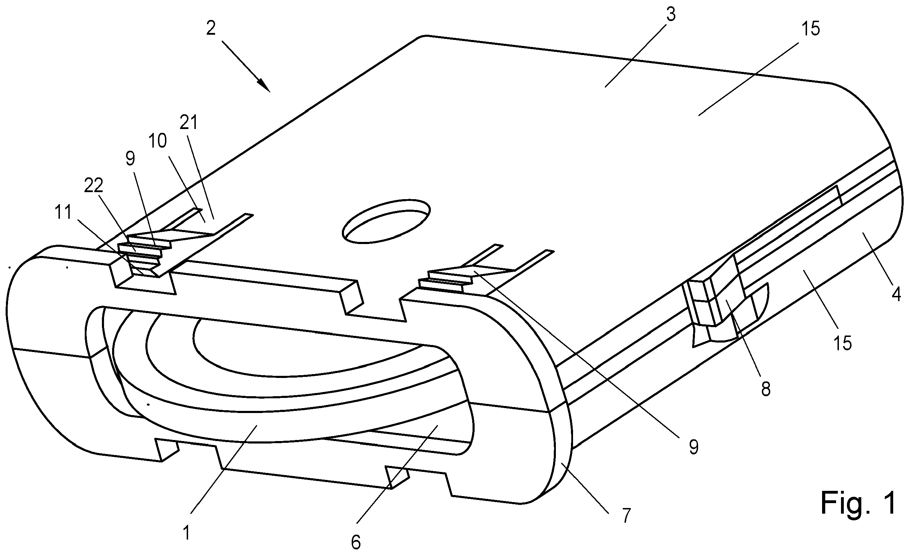

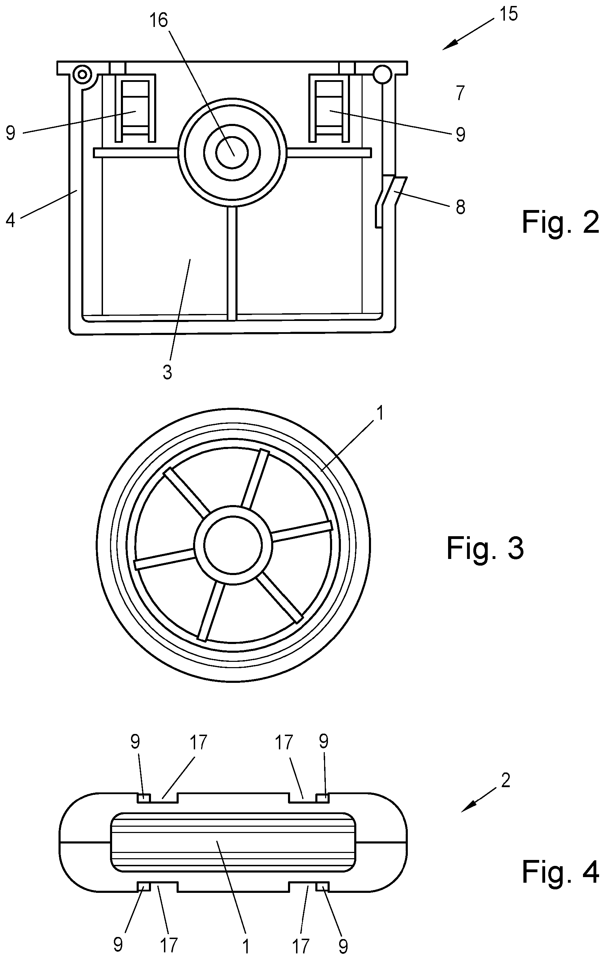

Die Rollenhalterung 2 besteht aus zwei identischen Halbschalen 15, die - wie in Fig. 1 gezeigt - aneinander anliegend miteinander verbunden sind, sodass sich eine becherartige Rollenhalterung 2 ergibt, die an einem Ende offen ist, dort den Flansch 7 aufweist und die am gegenüberliegenden Ende geschlossen ist. Jede Halbschale 15 trägt eines der ersten, distalen Halteelemente 8 (vgl. Fig. 1 und Fig. 2).

An der Innenseite der Halbschalen 15 sind Achsenstummel 16 angeformt, die bei zur Rollenhalterung 2 geschlossenen Halbschalen 15 den Abstand zwischen den Innenseiten der von den Halbschalen 15 gebildeten Längsseiten 3 überbrücken und so eine Achse für die Rolle 1 bilden.

In dem Flansch 7 sind im Bereich der weiteren, proximalen Halteelemente 9, also jener Halteelemente 9, die näher zum Flansch 7 und zum offenen Ende 6 der Rollenhalterung 2 angeordnet sind, Ausnehmungen 17 vorgesehen. Die Ausnehmungen 17 sind gegenüber den weiteren, proximalen Halteelementen 9 versetzt angeordnet, wobei sich die Ausnehmungen 17 mit den weiteren, proximalen Halteelementen 9 überlappen.

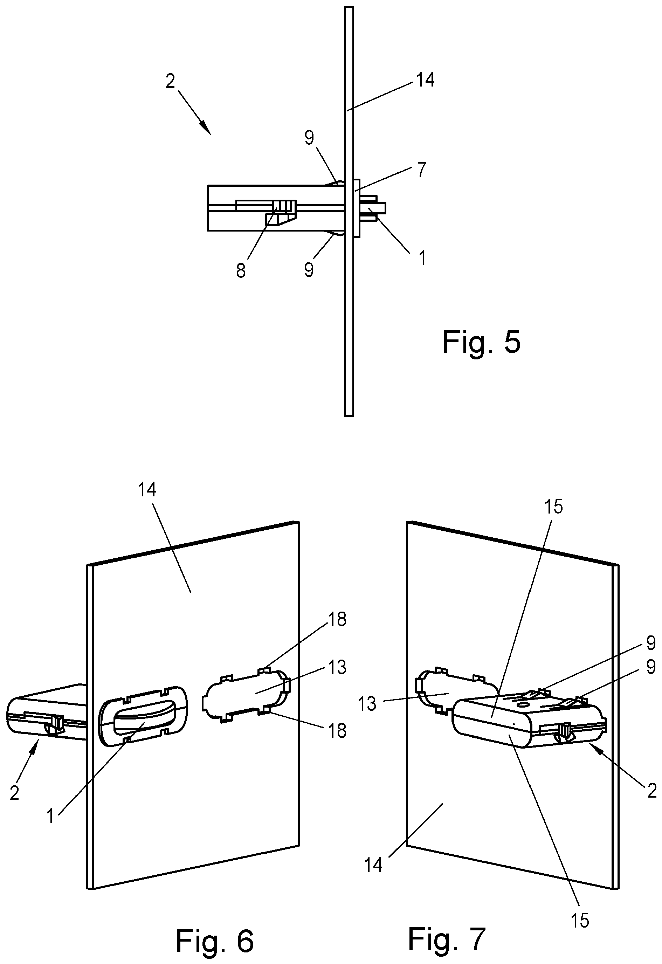

Die Ausnehmungen 17 im Flansch 7 erlauben einen Zugang zu den weiteren, proximalen Halteelementen 9, wenn ein Loch 13 in der Platte 14 der Stützwand so ausgebildet ist, wie dies in Fig. 6 und 7 gezeigt ist.

Wenn eine Rolle 1 mit ihrer Rollenhalterung 2 an einer dünnen Platte 14 einer Stützwand anzubringen ist, wird die Rollenhalterung 2 durch ein Loch 13 (vgl. Fig. 5, 6 und 7) in der Platte 14 gesteckt, bis die freien Enden 11 der Zungen 10 der vier weiteren, proximalen Halteelemente 9 neben dem Rand des Loches 13 an der Rückseite der Platte 14, die dem Flansch, der an der Außenseite der Platte anliegt, gegenüberliegt, anliegen. Ausschnitte 18 am Rand des Loches 13 in der Platte 14 (vgl. Fig. 6) sind bei eingesetzter Rollenhalterung wegen der Ausnehmungen 17 im Flansch 7 ebenso sichtbar wie die weiteren, proximalen Halteelemente 9.

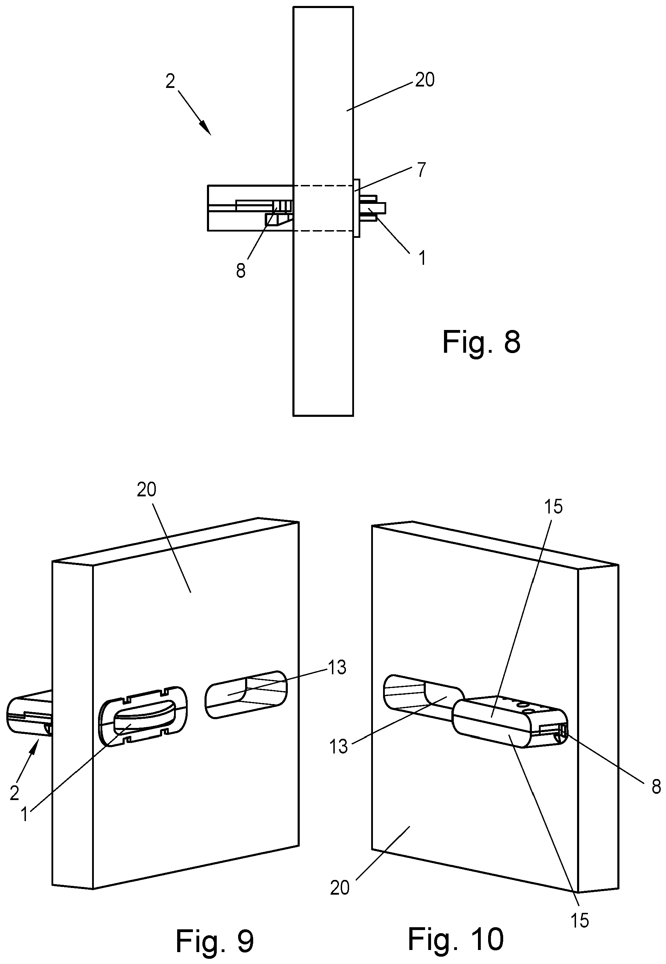

Wenn eine erfindungsgemäße Rolle 1 mit ihrer Rollenhalterung 2 an einer dicken Platte 20 einer Stützwand (beispielsweise einer Stützwand aus Holz oder dgl.) montiert wird, wird die Rollenhalterung 2 soweit in das Loch 13 eingeschoben, bis die freien Enden 11 der Zungen 10 der ersten, distalen Halteelemente 8 an der Rückseite der Platte 20 anliegen, wie dies in Fig. 8 und 10 gezeigt ist.

Wenngleich in den Zeichnungen ein durchgehender Flansch 7 gezeigt ist, genügen an sich flanschförmige Vorsprünge, die im Bereich des offenen Endes 6 der Rollenhalterung 2 von den Längsseiten 3 und den Querseiten 4 der Rollenhalterung 2 abstehen.

Es ist ersichtlich, dass eine erfindungsgemäße Rolle 1 bei Bedarf, d.h. wenn die Rolle 1 abgenützt ist, von der Platte 14 oder 20 abgenommen werden kann, indem die weiteren, proximalen Halteelemente 9 bzw. die ersten, distalen Halteelemente 8 so verformt werden, dass sie über die Außenseite der Rollenhalterung 2 nicht mehr überstehen, sodass die Rollenhalterung 2 mit der in ihr gelagerten Rolle 1 aus dem Loch 13 in der Platte 14 oder 20 herausgezogen werden kann.

Von Vorteil bei der erfindungsgemäßen Rolle 1 mit ihrer Rollenhalterung 2 ist es, dass die Halbschalen 15 der Rollenhalterung 2 nicht zwingend miteinander verbunden (verklebt oder dgl.) sein müssen, wenn die Kontur des Loches 13 in der Platte 14 oder 20 der Außenform der Rollenhalterung 2 wenigstens im Wesentlichen entspricht.

Die weiteren, proximalen Halteelemente 9, die als dreiseitig freigestellte Zungen 10 ausgebildet sind, haben in der in den Zeichnungen gezeigten Ausführungsform eine Querschnittsform, die sich von der Wurzel 21 der Zunge 10 zum freien Ende 11 hin erweitert.

Zusätzlich ist die Rastfläche 12 der die weiteren, proximalen Halteelemente 9 bildenden Zunge 10 zur Längserstreckung der Zunge 10 schräg ausgerichtet und reibungserhöhend ausgebildet, z.B. mit quer zu der Richtung, in welcher die Zunge 10 elastisch federnd verschwenken kann, verlaufenden Rippen 22 versehen.

Diese Ausführungsform der weiteren, proximalen Halteelemente 9 hat den Effekt, dass die Rolle 1 mit ihrer Rollenhalterung 2 in dünne Platten 14 mit unterschiedlichen Dicken eingesetzt und fixiert werden kann. Bei Platten 14 mit größerer Stärke federn die die weiteren, proximalen Halteelemente 9 bildenden Zungen 10 weniger weit aus der Rollenhalterung 2 heraus und stützen sich mit ihren schrägen Rastflächen 12, von den Rippen 22 gesichert, auf den inneren Kanten der Löcher 13 in der Platte 14 ab. Je dünner eine Platten 14 ist, desto weiter schwenken die weiteren, proximalen Halteelemente 9 heraus, sodass in jedem Fall ein sicherer Sitz der Rollenhalterung 2 gewährleistet ist.

Beispielsweise kann die Rollenhalterung 2 der erfindungsgemäßen Rolle 1 im Bereich ihrer weiteren, proximalen Halteelemente 9 so ausgebildet sein, dass sie beispielsweise für Stärken der Platten von 1,5 mm, 2,0 mm und 3,0 mm verwendet werden kann.

Die beschriebene Ausführungsform der weiteren, proximalen Halteelemente 9 kann auch bei den ersten, distalen Halteelementen 8 vorgesehen sein. Dies hat den vorteilhaften Effekt, dass die Rollenhalterung 2 nicht nur in dickere Platten 20 mit einer Stärke von beispielsweise 19 mm eingesetzt und fixiert werden kann, sondern auch bei Platten 20 der Stützwand mit einer anderen Stärke.

In der gezeigten Ausführungsform ist die Rollenhalterung 2 im Wesentlichen mit der Form eines einseitig offenen, quaderförmigen Gehäuses mit breiteren Längsseiten 3 und schmaleren Querseiten 4 ausgebildet. Dabei sind die weiteren, proximalen Halteelemente 9 in den Längsseiten 3 der im Wesentlichen quaderförmigen Rollenhalterung 2 vorgesehen - je zwei weitere, proximale Halteelemente 9 in jeder Längsseite 3. Die ersten, distalen Halteelemente 8 sind in den schmäleren Querseiten 4 der Rollenhalterung 2 vorgesehen. Die Querseiten 4 der Rollenhalterung 2 sind im gezeigten Ausführungsbeispiel konvex mit der Form eines halben Zylinders (Kreiszylinders) gekrümmt ausgebildet. Die Querseiten 4 können aber auch ebene Seiten sein.

Die erfindungsgemäße Rolle 1 mit ihrer Rollenhalterung 2 ist für Platten 14 aus beliebigem Werkstoff und von weitgehend beliebiger Stärke geeignet. Werkstoffe können Holz (beschichtet), Kunststoff, Metall usw. sein.

Zusammenfassend kann ein Ausführungsbeispiel der Erfindung wie folgt beschrieben werden:
Bei einer Rolle 1 mit einer Rollenhalterung 2, die für die Verwendung in Stützwänden für Isolierglas- und/oder Flachglasanlagen bestimmt ist, sind an der Rollenhalterung 2 Halteelemente 8, 9 mit unterschiedlichem Abstand zu dem offenen Ende 6 der Rollenhalterung 2, über welches die Rolle 1 nach außen ragt, vorgesehen. Erste, distale Halteelemente 8, die nach Art von Klinken wirken, sind zum Befestigen der Rollenhalterung 2 in einer dickeren Platte 20 und weitere, proximale Halteelemente 9 sind zum Befestigen der Rollenhalterung 2 in einer dünneren Platte 14 bestimmt. Vorgesehen sind vier weitere, proximale Halteelemente 9, die nach Art von Klinken wirken und die von gegenüberliegenden Längsseiten 3 der Rollenhalterung 2 elastisch verformbar nach außen abstehen. Die ersten, distalen Halteelemente 8 stehen von den Querseiten 4 der Rollenhalterung 2 elastisch verformbar nach außen ab.

## Patentansprüche

1. Rolle (1) mit einer Rollenhalterung (2), wobei die Rollenhalterung (2) einander gegenüberliegende Querseiten (4), Längsseiten (3) und ein offenes Ende (6) aufweist, wobei die Rolle (1) in der Rollenhalterung (2) drehbar gelagert ist, wobei die Rolle (1) teilweise aus dem offenen Ende (6) der Rollenhalterung (2) herausragt, wobei an dem offenen Ende (6) der Rollenhalterung (2) zumindest bereichsweise ein nach außen abstehender Flansch (7) vorgesehen ist, und wobei die Rollenhalterung (2) wenigstens ein von der Rollenhalterung (2) wegragendes, elastisch verformbares, erstes, distales Halteelement (8) aufweist, **dadurch gekennzeichnet, dass** die Rollenhalterung (2) wenigstens ein weiteres, proximales Halteelement (9) aufweist, und dass das weitere, proximale Halteelement (9) vom offenen Ende (6) der Rollenhalterung (2) einen anderen Abstand aufweist als das erste, distale Halteelement (8).

2. Rolle nach Anspruch 1, **dadurch gekennzeichnet, dass** das weitere Halteelement (9) als proximales Halteelement (9) vom offenen Ende (6) der Rollenhalterung (2) einen Abstand aufweist, der kleiner ist als der Abstand des ersten, distalen Halteelementes (8) vom offenen Ende (6) der Rollenhalterung (2).

3. Rolle nach Anspruch 1 oder 2, **dadurch gekennzeichnet, dass** das wenigstens eine weitere, proximale Halteelement (9) unter elastischem Verformen in eine Lage biegbar ist, in der das freie Ende des weiteren, proximalen Halteelementes (9) mit der Außenseite der Rollenhalterung (2) bündig ist.

4. Rolle nach einem der Ansprüche 1 bis 3, **dadurch gekennzeichnet, dass** wenigstens eine Gruppe mit wenigstens zwei, vorzugsweise vier, weiteren, proximalen Halteelementen (9) vorgesehen ist und dass alle weiteren, proximalen Halteelemente (9) der Gruppe vom offenen Ende (6) der Rollenhalterung (2) den gleichen Abstand haben.

5. Rolle nach Anspruch 4, **dadurch gekennzeichnet, dass** die weiteren, proximalen Halteelemente (9) der Gruppe einander gegenüberliegend in den Längsseiten (3) der Rollenhalterung (2) vorgesehen sind.

6. Rolle nach einem der Ansprüche 1 bis 5, **dadurch gekennzeichnet, dass** die Halteelemente (8, 9) Zungen (10) sind, deren Wurzeln (21) mit der Rollenhalterung (2), vorzugsweise einteilig, verbunden sind, und dass die freien Enden (11) der Zungen (10) zum offenen Ende (6) der Rollenhalterung (2) hinweisen und über die Außenseite der Rollenhalterung (2) vorstehen.

7. Rolle nach einem der Ansprüche 1 bis 6, **dadurch gekennzeichnet, dass** der Flansch (7) mehrfach unterbrochen oder durch flanschförmige Vorsprünge, vorzugsweise wenigstens zwei einander gegenüberliegende flanschförmige Vorsprünge, gebildet ist.

8. Rolle nach einem der Ansprüche 2 bis 7, **dadurch gekennzeichnet, dass** alle ersten, distalen Halteelemente (8) einerseits und alle weiteren, proximalen Halteelemente (9) anderseits vom offenen Ende (6) der Rollenhalterung (2) gleich weit entfernt sind.

9. Rolle nach einem der Ansprüche 1 bis 8, **dadurch gekennzeichnet, dass** die freien Rastflächen (12) der weiteren, proximalen Halteelemente (9) zur Längserstreckung der weiteren, proximalen Halteelemente (9) schräg ausgerichtet sind, wobei die freien Rastflächen (12) vorzugsweise reibungserhöhend ausgebildet sind und insbesondere Rippen (22) aufweisen.

10. Rolle nach einem der Ansprüche 1 bis 9, **dadurch gekennzeichnet, dass** die Dicke der Halteelemente (8, 9) zu ihrem freien Ende hin größer wird.

11. Rolle nach einem der Ansprüche 2 bis 10, **dadurch gekennzeichnet, dass** dem wenigstens einen weiteren, proximalen Halteelement (9) eine in dem Flansch (7) vorgesehene Ausnehmung (17) zugeordnet ist, und dass das weitere, proximale Halteelement (9) und die Ausnehmung (17) einander zumindest bereichsweise überlappend zueinander versetzt angeordnet sind.

12. Rolle nach einem der Ansprüche 1 bis 11, **dadurch gekennzeichnet, dass** das dem offenen Ende (6) gegenüberliegende Ende der Rollenhalterung (2) geschlossen ist.

13. Rolle nach einem der Ansprüche 1 bis 12, **dadurch gekennzeichnet, dass** die Rollenhalterung (2) zwei identische Halbschalen (15) umfasst.

14. Rolle nach einem der Ansprüche 1 bis 13, **dadurch gekennzeichnet, dass** die Rollenhalterung (2) einander gegenüberliegende Lageröffnungen, in denen eine Achse, auf der die Rolle (1) gelagert ist, aufgenommen ist, aufweist.

15. Rolle nach Anspruch 13, **dadurch gekennzeichnet, dass** an jeder der Halbschalen (15) ein Achsenstummel (16) angeformt ist, und dass die zwei Achsenstummel (16) bei aneinander anliegenden Halbschalen (15) eine Achse für die Rolle (1) bilden.

## Claims

1. Roller (1) with a roller mount (2), wherein the roller mount (2) has mutually opposite transverse sides (4), longitudinal sides (3) and an open end (6), wherein the roller (1) is rotatably mounted in the roller mount (2), wherein the roller (1) partially protrudes from the open end (6) of the roller mount (2), wherein an outwardly projecting flange (7) is provided at least in regions at the open end (6) of the roller mount (2), and wherein the roller mount (2) has at least one elastically deformable, first, distal holding element (8) projecting away from the roller mount (2), **characterized in that** the roller mount (2) has at least one further, proximal holding element (9), and **in that** the further, proximal holding element (9) is at a different distance from the open end (6) of the roller mount (2) than the first, distal holding element (8).

2. Roller according to claim 1, **characterized in that** the further holding element (9), as a proximal holding element (9), is at a distance from the open end (6) of the roller mount (2) that is smaller than the distance of the first, distal holding element (8) from the open end (6) of the roller mount (2).

3. Roller according to claim 1 or 2, **characterized in that** the at least one further, proximal holding element (9) is bendable, under elastic deformation, into a position in which the free end of the further, proximal holding element (9) is flush with the outside of the roller mount (2).

4. Roller according to one of claims 1 to 3, **characterized in that** at least one group with at least two, preferably four, further, proximal holding elements (9) is provided, and **in that** all further, proximal holding elements (9) of the group have the same distance from the open end (6) of the roller mount (2).

5. Roller according to claim 4, **characterized in that** the further, proximal holding elements (9) of the group are provided mutually oppositely in the longitudinal sides (3) of the roller mount (2).

6. Roller according to one of claims 1 to 5, **characterized in that** the holding elements (8, 9) are tongues (10) whose roots (21) are connected to the roller mount (2), preferably integrally, and **in that** the free ends (11) of the tongues (10) point towards the open end (6) of the roller mount (2) and project beyond the outside of the roller mount (2).

7. Roller according to one of claims 1 to 6, **characterized in that** the flange (7) is interrupted multiple times or is formed by flange-shaped projections, preferably at least two mutually opposite flange-shaped projections.

8. Roller according to one of claims 2 to 7, **characterized in that** all first, distal holding elements (8) on the one hand and all further, proximal holding elements (9) on the other hand are at an equal distance from the open end (6) of the roller mount (2).

9. Roller according to one of claims 1 to 8, **characterized in that** the free latching surfaces (12) of the further, proximal holding elements (9) are oriented obliquely to the longitudinal extension of the further, proximal holding elements (9), wherein the free latching surfaces (12) are preferably designed to increase friction and in particular have ribs (22).

10. Roller according to one of claims 1 to 9, **characterized in that** the thickness of the holding elements (8, 9) increases towards their free end.

11. Roller according to one of claims 2 to 10, **characterized in that** a recess (17) provided in the flange (7) is assigned to the at least one further, proximal holding element (9), and **in that** the further, proximal holding element (9) and the recess (17) are arranged offset to one another, overlapping at least in regions.

12. Roller according to one of claims 1 to 11, **characterized in that** the end of the roller mount (2) opposite the open end (6) is closed.

13. Roller according to one of claims 1 to 12, **characterized in that** the roller mount (2) comprises two identical half-shells (15).

14. Roller according to one of claims 1 to 13, **characterized in that** the roller mount (2) has mutually opposite bearing openings in which an axle, on which the roller (1) is mounted, is accommodated.

15. Roller according to claim 13, **characterized in that** a stub axle (16) is integrally formed on each of the half-shells (15), and **in that** the two stub axles (16) form an axle for the roller (1) when the half-shells (15) are abutting against one another.

## Revendications

1. Roulette (1) munie d'une monture de roulette (2), dans laquelle la monture de roulette (2) présente des côtés transversaux (4) qui se font face, des côtés longitudinaux (3) et une extrémité ouverte (6), la roulette (1) étant supportée avec possibilité de rotation dans la monture de roulette (2), la roulette (1) dépassant en partie de l'extrémité ouverte (6) de la monture de roulette (2), dans laquelle est prévue à l'extrémité ouverte (6) de la monture de roulette (2), au moins par zones, une bride (7) qui dépasse vers l'extérieur et dans laquelle la monture de roulette (2) présente au moins un premier élément de maintien distal (8) déformable de façon élastique qui dépasse de la monture de roulette (2), **caractérisée en ce que** la monture de roulette (2) comporte au moins un autre élément de maintien proximal (9) et **en ce que** l'autre élément de maintien proximal (9) présente une autre distance par rapport à l'extrémité ouverte (6) de la monture de roulette (2) que le premier élément de maintien distal (8).

2. Roulette selon la revendication 1, **caractérisée en ce que** l'autre élément de maintien (9) présente en tant qu'élément de maintien proximal (9) une plus petite distance par rapport à l'extrémité ouverte (6) de la monture de roulette (2) que la distance entre le premier élément de maintien distal (8) et l'extrémité ouverte (6) de la monture de roulette (2).

3. Roulette selon la revendication 1 ou 2, **caractérisée en ce que** l'au moins un autre élément de maintien proximal (9) peut être plié avec une déformation élastique dans une position dans laquelle l'extrémité libre de l'autre élément de maintien proximal (9) affleure avec la surface extérieure de la monture de roulette (2).

4. Roulette selon l'une des revendications 1 à 3, **caractérisée en ce qu'**au moins un groupe d'au moins deux, de préférence quatre, autres éléments de maintien proximaux (9) est prévu et **en ce que** tous les autres éléments de maintien proximaux (9) du groupe sont à la même distance de l'extrémité ouverte (6) de la monture de roulette (2).

5. Roulette selon la revendication 4, **caractérisée en ce que** les autres éléments de maintien proximaux (9) du groupe sont prévus les uns en face des autres dans les côtés longitudinaux (3) de la monture de roulette (2).

6. Roulette selon l'une des revendications 1 à 5, **caractérisée en ce que** les éléments de maintien (8, 9) sont des languettes (10) dont les racines (21) sont reliées avec la monture de roulette (2), de préférence d'un seul tenant, et **en ce que** les extrémités libres (11) des languettes (10) sont tournées vers l'extrémité ouverte (6) de la monture de roulette (2) et dépassent de la face extérieure de la monture de roulette (2).

7. Roulette selon l'une des revendications 1 à 6, **caractérisée en ce que** la bride (7) est interrompue plusieurs fois ou formée par des saillies en forme de bride, de préférence au moins deux saillies en forme de bride qui se font face.

8. Roulette selon l'une des revendications 2 à 7, **caractérisée en ce que** tous les premiers éléments de maintien distaux (8), d'une part, et tous les autres éléments de maintien proximaux (9), d'autre part, sont à la même distance de l'extrémité ouverte (6) de la monture de roulette (2).

9. Roulette selon l'une des revendications 1 à 8, **caractérisée en ce que** les surfaces d'enclenchement libres (12) des autres éléments de maintien proximaux (9) sont orientées à l'oblique par rapport à la longueur des autres éléments de maintien proximaux (9), les surfaces d'enclenchement libres (12) étant de préférence conçues pour accroître la friction et présentant en particulier des nervures (22).

10. Roulette selon l'une des revendications 1 à 9, **caractérisée en ce que** l'épaisseur des éléments de maintien (8, 9) augmente vers leur extrémité libre.

11. Roulette selon l'une des revendications 2 à 10, **caractérisée en ce que** l'au moins un autre élément de maintien proximal (9) est associé à un creux (17) prévu dans la bride (7) et **en ce que** l'autre élément de maintien proximal (9) et le creux (17) sont décalés l'un par rapport à l'autre et disposés en se chevauchant au moins par zones.

12. Roulette selon l'une des revendications 1 à 11, **caractérisée en ce que** l'extrémité de la monture de roulette (2) faisant face à l'extrémité ouverte (6) est fermée.

13. Roulette selon l'une des revendications 1 à 12, **caractérisée en ce que** la monture de roulette (2) comprend deux demi-coques (15) identiques.

14. Roulette selon l'une des revendications 1 à 13, **caractérisée en ce que** la monture de roulette (2) présente des ouvertures de palier qui se font face, dans lesquelles est logé un axe sur lequel la roulette (1) est supportée.

15. Roulette selon la revendication 13, **caractérisée en ce qu'**un tronçon d'axe (16) est formé sur chacune des demi-coques (15) et **en ce que** les deux tronçons d'axe (16) forment un axe pour la roulette (1) quand les demi-coques (15) reposent l'une sur l'autre.
